Europäisches Patentamt

European Patent Office

Office européen des brevets

(11) Numéro de publication: **0 317 389**

**A1**

(12) ## DEMANDE DE BREVET EUROPEEN

(21) Numéro de dépôt: 88402803.6

(51) Int. Cl.⁴: **B 60 N 1/08**

(22) Date de dépôt: 07.11.88

(30) Priorité: 20.11.87 FR 8716103

(43) Date de publication de la demande:
24.05.89 Bulletin 89/21

(84) Etats contractants désignés:
AT BE CH DE ES GB GR IT LI LU NL SE

(71) Demandeur: A. & M. COUSIN Etablissements COUSIN
FRERES
Le Bois de Flers
F-61103 Flers Cedex Orne (FR)

(72) Inventeur: Pipon, Yves
La Garenne
F-61100 St-Georges-des-Groseillers Flers (FR)

Droulon, Georges
Rue de la Garenne
F-61100 St-Georges-des-Groseillers Flers (FR)

(74) Mandataire: Madeuf, Claude Alexandre Jean et al
CABINET MADEUF 3, avenue Bugeaud
F-75116 Paris (FR)

(54) Glissières à vis sans fin réversibles permettant un déplacement micro-millimétrique et comportant une mémoire pour siège de véhicule.

(57) Glissières à vis sans fin dans lesquelles le socle (5) porte également entre les deux glissières (1, 2) un profilé (16) formant une deuxième crémaillère coopérant avec une vis sans fin (19) réversible et pouvant être bloquée par un deuxième sabot (26) dont le mouvement est commandé par un deuxième levier (28), les leviers (12 et 28) pouvant pivoter contre l'action de ressorts (14, 29) par l'intermédiaire d'un troisième levier (39) solidaire d'un arceau (35) articulé placé entre les deux glissières (1, 2) de façon à libérer la vis sans fin (4) de verrouillage des glissières (1, 2) et la deuxième vis sans fin (19) placée dans un carter (20) et coopérant avec la deuxième crémaillère ; le boîtier (8) et le carter (20) portant l'un et l'autre des pièces auxiliaires (8a, 30) avec des butées (8c, 22) afin de faire coïncider la position du boîtier (8) commandant le déplacement des glissières (1, 2) et le carter (20) constituant la mémoire mécanique des glissières.

Fig.1

EP 0 317 389 A1

Bundesdruckerei Berlin

## Description

## Glissières à vis sans fin réversibles permettant un déplacement micro-millimétrique et comportant une mémoire pour siège de véhicule.

Actuellement, les glissières pour siège de véhicule dites à mémoire peuvent être classées en deux groupes qui sont :

a) des glissières manuelles dont la position choisie au préalable est respectée lors du retour du siège après un déplacement quelconque. Il s'agit d'un mécanisme comportant au moins une crémaillère destinée au réglage en longueur du siège et d'un second mécanisme avec une seconde crémaillère, la partie mobile de la deuxième glissière étant destinée à constituer la mémoire. Cet ensemble de mécanismes est encombrant et peu précis.

b) le deuxième groupe de glissières à mémoire est à commande électrique dont la position choisie après un déplacement quelconque du siège se retrouve en utilisant une centrale électronique mais, dans ce cas, il y a lieu de prévoir une construction assez lourde, encombrante et coûteuse.

Dans les cas, où les glissières du siège ne comportent pas de mémoire à position choisie et l'on est à chaque fois obligé, après un déplacement quelconque du siège, de refaire un réglage complet qui convient à l'utilisateur.

Or, de plus en plus, pour les véhicules à deux portes, il est nécessaire d'avoir des glissières de réglage longitudinal de chaque siège avant qui comportent des mémoires par positionnement du siège pour le déplacement temporaire rapide du siège pour permettre aux passagers arrière d'un véhicule à deux portes d'entrer ou de sortir de ce véhicule, puis de ramener le siège avant considéré dans la position antérieure.

Il est bon de rappeler que dans le cas d'une glissière dite manuelle à mémoire, le réglage tant du siège que de la mémoire est tributaire du pas de crantage ou du pas de chaque crémaillère de glissière ; donc la position du siège ne peut être obtenue qu'avec un réglage approximatif tenant compte du pas du crantage ou de la crémaillère.

Dans le cas de la commande électrique à mémoire le positionnement est du type millimétrique qui est parfois appelé improprement d'ailleurs micro-millimétrique.

La présente invention a pour objet de réaliser un ensemble de deux glissières à commande mécanique comportant une mémoire également mécanique mais qui utilise, aussi bien pour le déplacement des parties mobiles des glissières que pour pour la mémoire, une vis sans fin réversible coopérant avec une crémaillère de façon à permettre un réglage micro-millimétrique de la position de chaque siège par phase manuelle.

L'obtention lors du retour du siège à la position préalablement choisie micro-millimétrique est définie par la position d'une mémoire au déplacement contrôlé par une vis ayant elle aussi un pas qui lui permet sa réversibilité et disposée parallèlement aux glissières.

Conformément à l'invention, les glissières à vis sans fin réversibles permettant un déplacement micromillimétrique et comportant une mémoire pour siège de véhicule dans lequel deux glissières parallèles constituées chacune par un élement fixe et un élement coulissant supérieur sont fixées par leurs éléments inférieurs sur le plancher du véhicule directement ou par l'intermédiaire d'un socle, l'une des glissières présentant sur la face verticale inférieure de l'élément fixe une crémaillère coopérant avec une première vis sans fin réversible montée folle sur un axe solidaire d'un boîtier fixé sur la partie supérieure de l'élément mobile de la glissière, des moyens de blocage de la première vis sans fin par un sabot sont prévus par l'action d'un premier levier, le socle placé sous au moins une glissière porte également entre les deux glissières un profilé formant une deuxième crémaillère coopérant avec une deuxième vis sans fin réversible et pouvant être bloquée par un deuxième sabot dont le mouvement est commandé par un deuxième levier, les premier et deuxième leviers pouvant pivoter contre l'action de ressorts par l'intermédiaire d'un troisième levier solidaire d'un arceau articulé placé entre les deux glissières de façon à libérer la vis sans fin de verrouillage des glissières et la deuxième vis sans fin placée dans un carter et coopérant avec la deuxième crémaillère, le boîtier et le carter portant l'un et l'autre des butées afin de faire coïncider la position du boîtier commandant le déplacement des glissières et le carter constituant la mémoire mécanique des glissières, un quatrième levier étant monté sur un arbre commandant le déverrouillage du premier levier et donc de la première vis sans fin et permettant de déplacer les parties supérieures des glissières sans changer la position du carter constituant la mémoire des glissières.

Suivant une autre caractéristique de l'invention, lors de l'abaissement du troisième levier sous l'action de l'arceau, l'extrémité arrière de ce troisième levier en forme de bec qui coopère avec des ouvertures des pièces constituant les butées limitant le déplacement de la mémoire et des glissières par pénétration du bec dans les ouvertures pré-citées en permettant le déplacement simultané des éléments mobiles des glissières et de la mémoire constituée par le carter se déplaçant le long de la deuxième crémaillère par l'intermédiaire de la deuxième vis sans fin réversible.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est un plan de glissière à mémoire pour siège de véhicule conforme à l'invention.

La fig. 2 est une élévation latérale partie en coupe suivant la ligne II-II de la fig. 1.

La fig. 3 est une élévation latérale prise suivant la ligne III-III de la fig. 1 d'un des organes de commande de la glissière à mémoire de l'invention.

La fig. 4 montre les organes de verrouillage reliant les glissières à la mémoire, les glissières étant en position libre.

La fig. 5 montre les organes de verrouillage des glissières, la mémoire étant en position de blocage pour permettre l'entraînement de celle-ci à la position choisie d'utilisation.

La fig. 6 est une coupe à plus grande échelle prise selon la ligne VI-VI de la fig. 1.

La fig. 6a est une vue en plan, à plus grande échelle, d'une partie de la fig. 6.

La fig. 6b est une coupe suivant la ligne A-A de la fig. 6a.

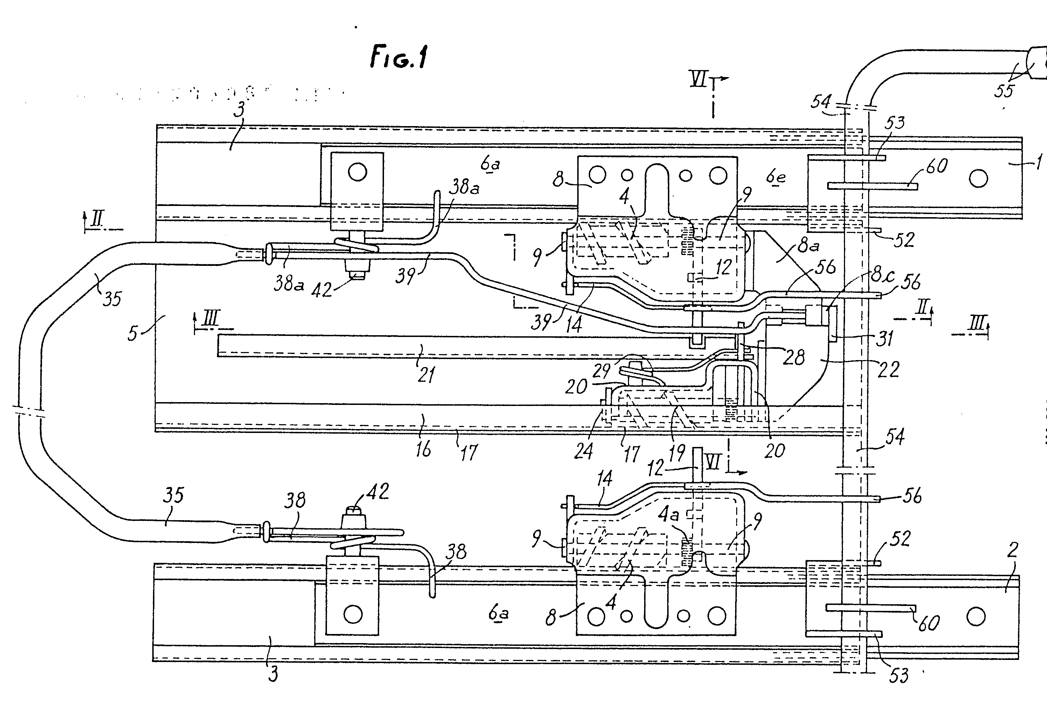

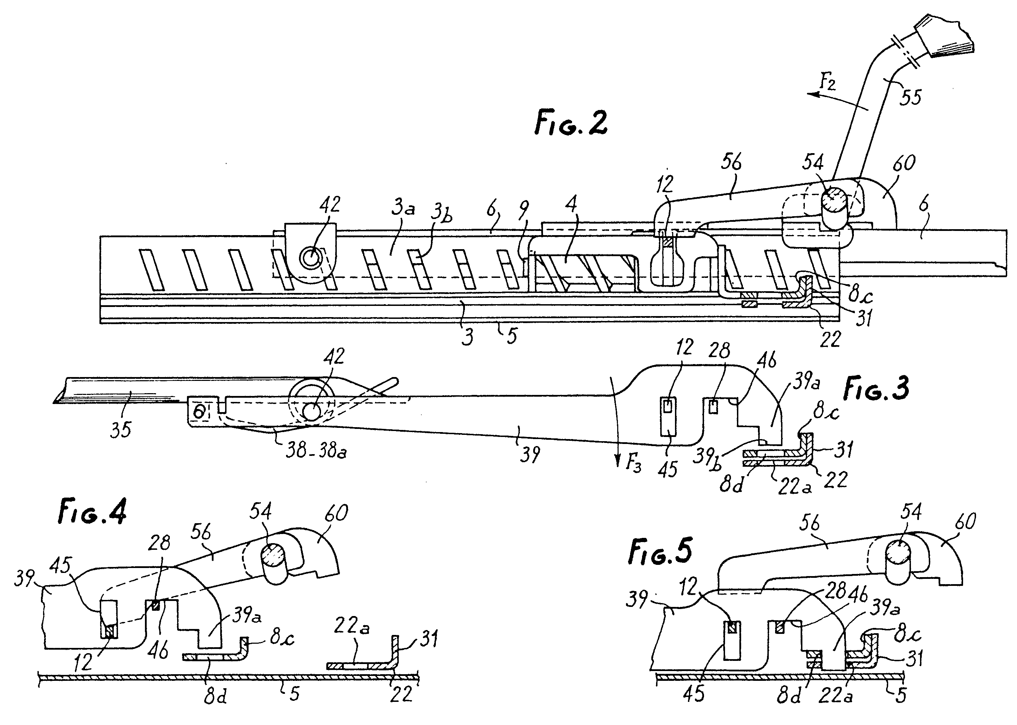

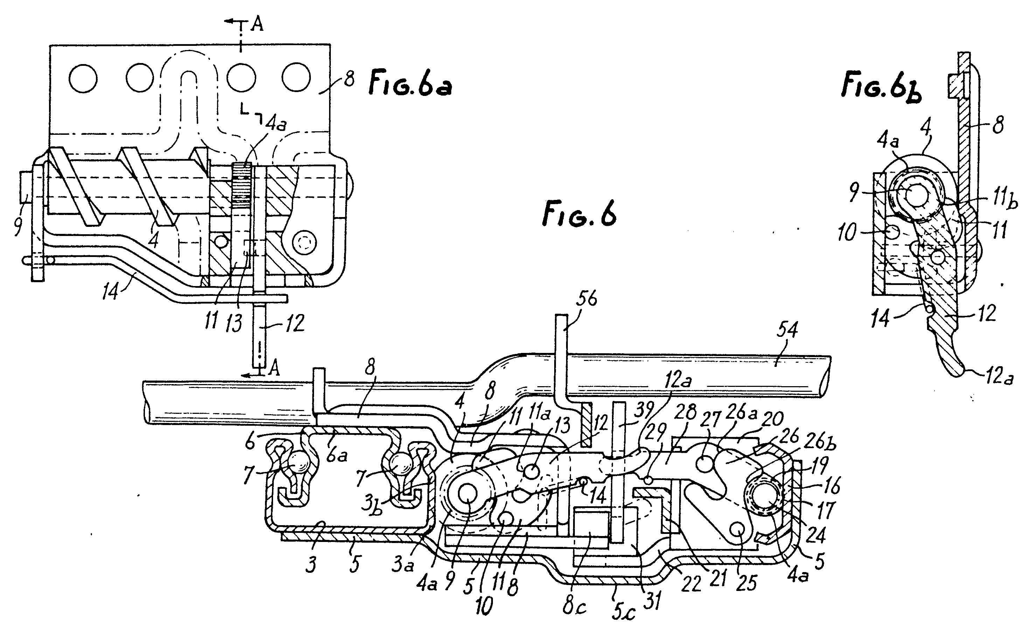

A la fig. 1, on a représenté en plan deux glissières 1, 2 parallèles destinées au réglage longitudinal d'un siège. L'élément inférieur fixe 3 de la glissière 1, comporte, d'une manière connue en soi (voir fig. 6) sur la partie verticale 3a, une crémaillère 3b qui est le plus souvent constituée par des crantages légèrement inclinés destinés à coopérer avec une vis sans fin 4 réversible (voir fig. 2).

Dans le cas de la fig. 1, la glissière de droite 1 est fixée par l'intermédiaire d'un socle 5 sur le plancher du véhicule.

L'élément mobile supérieur 6 de chaque glissière 1 ou 2 est maintenu dans l'élément fixe 3 par l'intermédiaire de billes 7 qui sont espacées par des tiges d'une manière connue en soi. De plus, le dessus 6a de l'élément mobile supérieur 6 de la glissière 1 porte une ferrure 8 formant boîtier (voir fig. 1, 6, 6a et 6b) dans laquelle sont montés, d'une part l'axe 9 autour duquel tourne folle la vis sans fin 4 et, d'autre part, l'axe 10 sur lequel est monté un sabot 11 comportant une denture 11b destinée à pénétrer sur une portion circulaire dentée 4a solidaire de la vis 4 pour freiner et bloquer celle-ci du fait que le levier 12 articulé sur l'axe 9 de la vis sans fin 4 bloque le sabot 11 par l'intermédiaire d'un ergot 13 coopérant avec une partie en came 11a du sabot 11. Le levier 12 est soulevé en permanence c'est-à-dire tend à bloquer le sabot 11 sur la portion circulaire dentée 4a de la vis 4 au moyen d'un ressort 14 (voir fig. 1, 6, 6a et 6b). La glissière 2 ne comporte pas, dans l'exemple représenté, de verrouillage entre l'élément supérieur 6 et l'élément inférieur 3, le positionnement étant obtenu par la vis 4 en relation avec la crémaillère 3b.

Comme il a été dit précédemment, le socle 5 porte, dans sa partie dirigée vers l'autre glissière 2 (voir fig. 1), un profilé 16 dans lequel est prévue une crémaillère 17 obtenue par des découpes ou ajoues parallèles inclinés qui coopèrent avec une seconde vis sans fin 19 montée dans un carter 20 (voir fig. 1 et 6) coulissant dans le profilé 16. Ce carter 20 coulisse dans le profilé 16 d'avant en arrière par rapport à la ferrure 8 solidaire du dessus 6a de l'élément mobile supérieur 3 de la glissière. Un prolongement 22 du carter 20 constitue une butée 31 qui a pour fonction de limiter la course de l'ensemble profil supérieur 3 lors du retour en arrière de tout l'ensemble glissière supérieure 3 solidaire du boîtier 8 avec la butée 8c.

Comme dans le cas précédent, la vis sans fin 19 est montée sur un axe 24 porté par le carter 20 qui contient également un axe 25 autour duquel peut pivoter un sabot 26 présentant une partie en came 26a destinée à coopérer avec un ergot 27 porté par un levier 28 articulé sur l'axe 24 et rappelé vers le haut par un ressort 29. Le blocage de la vis 19 se fait de la même manière que pour la vis sans fin 4.

Dans le cas présent, le guide longitudinal 22 placé sous le carter 20 peut être supporté par un chemin de roulement non représenté, par exemple constitué par une ou plusieurs aiguilles qui roulent sur la partie 5c du socle 5 en assurant ainsi un maintien parfait de ce guide longitudinal 22.

Comme cela est visible à la fig. 1, le guide longitudinal 22 porte, à sa partie arrière, un sabot vertical 31 formant butée. De même, le boîtier 8 contenant la vis sans fin 4, comporte à sa partie arrière une pièce 8a convenablement fixée sur lui et présentant une butée verticale 8c qui est destinée à coopérer avec le sabot vertical 31 de la pièce 22 (voir fig. 1).

Un arceau 35 est, en outre, monté sur la face avant des glissières 3, et cet arceau pivote d'une manière connue en soi sur des axes 40, 42 solidaires des côtés latéraux des éléments supérieurs 6 des glissières.

De plus, l'arceau 35 est soumis, de manière connue en soi, à l'action de deux ressorts 38, 38a tendant à abaisser cet arceau (voir fig. 1 et 3) vers le plancher du véhicule.

Le levier 39, qui est décalé dans le plan horizontal comme cela est représenté à la fig. 1, repose par l'intermédiaire d'une ouverture 45 et d'un décrochement 46 (voir fig. 3, 4, 5) sur les leviers 12 et 28 commandant les organes de blocage des vis sans fin 4 et 19 puis l'extrémité arrière du levier 39 pénètre par un bec 39b dans des ouvertures 8d et 22a des butées 8c, 31 afin de solidariser ces butées lorsque le siège est réglé dans sa position choisie par l'utilisateur.

Comme cela est visible à la fig. 1, il est également prévu, sur la partie arrière 6e de l'élément supérieur 6 de la glissière 1 des pattes 52, 53 percées de trous pour le passage d'un arbre 54 muni d'une poignée de manoeuvre 55.

Cet arbre 54 commande un petit levier 56 dont l'extrémité avant repose sur le levier 12.

En admettant que l'utilisateur du siège ait convenablement réglé en longueur ce dernier, les différents organes des glissières 1 et 2 ainsi que la mémoire constituée par la crémaillère 17 et la vis sans fin 19, occupent la position représentée aux fig. 1 et 6. Les vis sans fin 4 et 19 sont bloquées par les sabots 11 et 26.

Pour permettre aux passagers de pénétrer à l'arrière dans un véhicule deux portes, il est nécessaire de déplacer le ou les sièges avant vers l'avant. L'action dans le sens de la flèche F2 (fig. 2) pratiquée sur le levier 55 agit par l'intermédiaire du levier 56 sur le levier de verrouillage 12 de la vis 4 disposée sur la glissière 1. La vis 4 étant libérée par cette action, il est possible de déplacer le siège vers l'avant.

Pour éviter de maintenir le levier 55 lors du coulissement du siège vers l'avant, le sabot 11 est maintenu sous la partie en came 11a par l'appui du bout du levier 12a glissant sous la réglette 21 évitant au levier 12 de reprendre sa place et ainsi d'empêcher tout verrouillage intempestif.

On note cependant que le levier 55 peut être remplacé soit par une commande placée en haut du dossier du siège, soit par une commande disposée à l'arrière du siège considéré.

Lors du déblocage par une action en retour, le sabot 11 sous l'action du ressort 14, lorsque le siège a repris sa position première, bloque la vis sans fin 4 dans la position choisie puisque que la butée réglable 8c est venue en contact avec le support vertical 31 de la mémoire.

On évite ainsi de solliciter la denture de blocage de la vis sans fin 4 de la glissière.

Dans le cas où l'on désire effectuer un réglage complet du siège avec déplacement de la mémoire, l'utilisateur assis sur le siège soulève l'arceau 35 à l'encontre des ressorts 38, 38a ce qui a pour effet de faire basculer le levier 39 dans le sens de la flèche F3 (fig. 3).

Le levier 39 en pivotant dans le sens de la flèche F3 (fig. 3) verrouille les butées 8c, 31 (voir fig.5) par l'intermédiaire de son bec 39b et en même temps abaisse les leviers 12, 28 ce qui déverrouille les vis sans fin 4 et 19. Les glissières 1 et 2 ainsi que la mémoire sont donc libres et les vis sans fin 4 et 19 peuvent librement tourner dans les crémaillères 3a, 17 et prendre la position choisie avec un déplacement micromillimétrique en donnant ainsi un confort absolu au passager. Dès que celui-ci relâche l'action sur l'arceau 35, les différents organes reprennent la position représentée à la fig. 1 et 3 sous l'action des ressorts 38, 38a. Les vis sans fin 4, 19 sont de nouveau bloquées puisque les leviers 39 et 56 sont revenus à leur position initiale.

La barre de commande 54 revient en position de repos sous l'effet d'un ressort (non représenté) et est maintenue dans cette position par une butée 60 qui prend appui sur le dessus de la glissière supérieure 1.

## Revendications

1. Glissières à vis sans fin réversibles permettant un déplacement micro-millimétrique et comportant une mémoire pour siège de véhicule dans lequel deux glissières parallèles (1, 2) constituées chacune par un élément fixe (3) et un élément coulissant supérieur (6) sont fixées par leurs éléments inférieurs (3) sur le plancher du véhicule directement ou par l'intermédiaire d'un socle (5), l'une des glissières (1) présentant sur la face verticale inférieure de l'élément fixe (3) une crémaillère (3b) coopérant avec une première vis sans fin réversible (4) montée folle sur un axe (9) solidaire d'un boîtier (8) fixé sur la partie supérieure de l'élément mobile (6) de la glissière, des moyens de blocage de la première vis sans fin par un sabot (11) étant prévus par l'action d'un premier levier (12), caractérisées en ce que le socle (5) placé sous au moins une glissière porte également entre les deux glissières (1, 2) un profilé (16) formant une deuxième crémaillère coopérant avec une deuxième vis sans fin (19) réversible et pouvant être bloquée par un deuxième sabot (26) dont le mouvement est commandé par un deuxième levier (28), les premier et deuxième leviers (12 et 28) pouvant pivoter contre l'action de ressorts (14, 29) par l'intermédiaire d'un troisième levier (39) solidaire d'un arceau (35) articulé placé entre les deux glissières (1, 2) de façon à libérer la vis sans fin (4) de verrouillage des glissières (1, 2) et la deuxième vis sans fin (19) placée dans un carter (20) et coopérant avec la deuxième crémaillère ; le boîtier (8) et le carter (20) portant l'un et l'autre des pièces auxiliaires (8a, 22) avec des butées (8c, 31) afin de faire coïncider la position du boîtier (8) commandant le déplacement des glissières (1, 2) et le carter (20) constituant la mémoire mécanique des glissières un quatrième levier (56) étant monté sur un arbre (54) commandant le déverrouillage du premier levier (12) et donc de la première vis sans fin (4) et permettant de déplacer les parties supérieures (6) des glissières sans changer la position du carter (20) constituant la mémoire des glissières.

2. Glissières à vis sans fin réversibles suivant la revendication 1, caractérisées en ce que, lors de l'abaissement du troisième levier (39) sous l'action de l'arceau (35), l'extrémité arrière de ce troisième levier (39) en forme de bec (39b) coopère avec des ouvertures (8d, 22a) des pièces (8c et 31) constituant les butées limitant le déplacement de la mémoire et des glissières par la pénétration du bec (39a) dans les ouvertures précitées en permettant le déplacement simultané des éléments mobiles des glissières (1, 2) et de la mémoire constituée par le carter (20) se déplaçant le long de la deuxième crémaillère (17) par l'intermédiaire de la deuxième vis sans fin réversible (19).

# Fig.1

VII

55

54

53

3

6a

38a

8

6e

4

9

60

1

II

9

39

8a

56

35

38a 42

39

14

12

8c 56

5

III

III

21

20 29

28

31

22

20

24 17

16 17

54

12 19 VII

14

35

38

42

4a

56

9 9

38

4

52

2

6a

8

60

3

53

EP 0 317 389 A1

FIG. 2

FIG. 3

FIG. 4

FIG. 5

EP 0 317 389 A1

Fig.6b

Fig.6

Fig.6a

Office européen
des brevets

**RAPPORT DE RECHERCHE EUROPEENNE**

Numero de la demande

EP 88 40 2803

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 648 657 (COX) <br> * Colonne 2, ligne 50 - colonne 4, ligne 15; figures * <br> --- | 1 | B 60 N 1/08 |
| A | EP-A-0 169 097 (PIPON) <br> * Page 4, ligne 26 - page 6, ligne 29; figures * <br> ----- | 1 | |

DOMAINES TECHNIQUES RECHERCHES (Int. Cl.4)

B 60 N 1/00

Le présent rapport a été établi pour toutes les revendications

| Lieu de la recherche | Date d'achèvement de la recherche | Examinateur |
|---|---|---|
| LA HAYE | 03-01-1989 | HORVATH R.C. |